# EUROPEAN PATENT SPECIFICATION

(11) **EP 2 177 345 B1**
(45) Date of publication and mention of the grant of the patent: **18.09.2013**
(21) Application number: 08841870.2
(22) Date of filing: 20.10.2008
(51) Int. Cl.: B29D 30/16, B29D 30/46

(54) **METHOD OF MANUFACTURING PNEUMATIC TIRE**
VERFAHREN ZUR HERSTELLUNG EINES LUFTREIFENS
PROCÉDÉ DE FABRICATION DE PNEU

(30) Priority: 23.10.2007 JP 2007274590
(43) Date of publication of application: 21.04.2010
(73) Proprietor: Sumitomo Rubber Industries, Ltd., Kobe-shi, Hyogo 651-0072 (JP)
(72) Inventor: NAKATA, Norikatsu, Kobe-shi Hyogo 651-0072 (JP)
(74) Representative: Manitz, Finsterwald & Partner GbR
(86) International application number: PCT/JP2008/002961
(87) International publication number: WO 2009/054114

(56) References cited:
- JP-A- 2003 039 915
- JP-A- 2005 238 590
- JP-A- 2006 160 236
- US-A- 4 248 287

## Description

The present invention relates to a method of manufacturing a pneumatic tire.

### [Background Art]

A tire is obtained from a raw cover (which is also referred to as an unvulcanized tire). In the raw cover, a large number of rubber members are laminated. A specific example of the rubber member includes an inner liner, a carcass ply, a sidewall, a belt ply, a tread and the like.

The carcass ply of the tire is constituted by a large number of cords and a topping rubber. In a method of manufacturing the tire, the carcass ply is obtained by sticking the topping rubber to the cords to get a sheet and then cutting the sheet to have a proper length. In the manufacturing method, the carcass ply formed like a plane is wound cylindrically. Both ends of the cylindrical carcass ply are fitted in ring-shaped beads. The cylindrical carcass ply is folded back around the beads. A distance between the beads on both sides is reduced while a central part of the cylindrical carcass ply is swollen. In the manufacturing method, the carcass ply formed like a plane is changed to take a three-dimensional shape. The change in the shape causes a variation in a density of the cord, a thickness of the topping rubber or the like. The change in the shape might influence a uniformity of the tire. In the manufacturing method, there is a limit to an enhancement in the uniformity of the tire.

There has been investigated a method of manufacturing a tire which can enhance a performance and a productivity of a tire. Japanese Laid-Open Patent Publication No. 11-254906 has disclosed a method of manufacturing a tire in which a large number of strip pieces are stuck to form a carcass ply. In the manufacturing method, the strip pieces are arranged in a circumferential direction. The strip pieces are arranged continuously. In the manufacturing method, a carcass ply is directly formed on a circular support having the same configuration as an internal surface of a tire to be manufactured.

Referring to the manufacturing method, the strip piece meanders in the formation of the carcass ply in some cases. The meander causes a disorder of a cord array. The disorder of the cord array influences the uniformity of the tire. For this reason, the manufacturing method requires a great deal of time and labor and expensive equipment in order to suppress the disorder of the cord array, thereby forming the carcass ply. The manufacturing method has a poor productivity of the tire.

Japanese Laid-Open Patent Publication No. 2006-160236 has disclosed a method of manufacturing a tire which can improve a uniformity. In the manufacturing method, the carcass ply includes a continuous ply portion obtained by winding in a circumferential direction in a tread portion and lapping a start end and a termination end in the circumferential direction of the tire, and a strap ply portion on both sides thereof. In the strap ply, a large number of strap pieces are arranged in a circumferential direction. In the manufacturing method, the strap ply portion is bent inward in a radial direction corresponding to a shape of the sidewall portion and adjacent strap pieces are overlapped so that a side portion of a carcass is formed.

### [Disclosure of the Invention]

### [Problems that the Invention is to Solve]

In a manufacturing method described in the Japanese Laid-Open Patent Publication No. 2006-160236, it is necessary to prepare a carcass ply having a proper size every size of a tire which is manufactured. In the manufacturing method, a stock of an intermediate product is generated. The manufacturing method has a poor productivity of a tire. In the manufacturing method, an adaptability to a change in a specification of a tire to be manufactured is insufficient. The manufacturing method cannot cope with a small amount and multi-product production.

It is an object of the present invention to provide a method of manufacturing a tire which is excellent in a productivity.

### [Means for Solving the Problems]

A method of manufacturing a tire according to the present invention as defined in claim 1, includes the steps of:
(1) preparing a large number of reference plies, each of which includes a plurality of cords arranged in parallel and a topping rubber, has a center portion and a pair of side portions and can be an element of a carcass ply;
(2) bonding the reference ply to the other reference ply;
(3) forming a slit extended in a transverse direction in the side portion and dividing the side portion into a plurality of small pieces;
(4) providing the side portion along a side surface of a toroidal mold and partially overlapping the small piece and the other small piece;
(5) assembling the other member into the reference ply, thereby obtaining a raw cover; and
(6) pressurizing and heating the raw cover in a mold.

In the manufacturing method, preferably, a length of the reference ply in a circumferential direction is equal to or greater than 20 mm.

In the manufacturing method, preferably, a length of the small piece in a circumferential direction is equal to or greater than 15 mm and is equal to or smaller than 30 mm.

Another method of manufacturing a tire according to the present invention as defined in claim 4, includes the steps of:
(1) preparing a large number of reference plies, each of which includes a plurality of cords arranged in parallel and a topping rubber, has a center portion and a pair of side portions and can be an element of a carcass ply;
(2) forming a slit extended in a transverse direction in the side portion and dividing the side portion into a plurality of small pieces;
(3) bonding the reference ply to the other reference ply;
(4) providing the side portion along a side surface of a toroidal mold and partially overlapping the small piece and the other small piece;
(5) assembling the other member into the reference ply, thereby obtaining a raw cover; and
(6) pressurizing and heating the raw cover in a mold. Preferred embodiments of the invention are defined in the dependent claims.

### [Advantage of the Invention]

In the manufacturing method, the reference ply is bonded to the other reference ply so that the carcass ply is formed. By regulating a length of the reference ply and the number of the reference plies, it is possible to control a size of the carcass ply. The manufacturing method is excellent in an adaptability to a change in a size of a tire which is manufactured. In the manufacturing method, it is not necessary to previously prepare the carcass ply every tire which is manufactured. Therefore, a generation of an intermediate stock can be suppressed. The manufacturing method is excellent in a productivity of the tire. In the manufacturing method, the slit extended in the transverse direction is formed in the side portion of the reference ply, and the side portion is divided into a plurality of small pieces. Furthermore, the small piece of the side portion and the other small piece are partially overlapped with the side portion provided along the side surface of the toroidal mold so that the carcass ply is formed. In the manufacturing method, it is possible to suppress a disorder of a cord array in a change of a shape from the reference ply on a plane into a carcass ply taking a three-dimensional shape. The tire manufactured by the manufacturing method is excellent in a uniformity.

### [Brief Description of the Drawings]

Fig. 1 is a sectional view showing a part of a pneumatic tire which can be manufactured by a method of manufacturing a tire according to an embodiment of the present invention,
Fig. 2 is a schematic view showing a part of a manufacturing apparatus to be used for forming a carcass ply of the tire in Fig. 1,
Fig. 3 (a) is a plan view showing a part of another manufacturing apparatus to be used for forming the carcass ply of the tire in Fig. 1 and Fig. 3(b) is a front view showing the same,
Fig. 4 is a perspective view showing a reference ply on which a slit is formed by the manufacturing apparatus in Fig. 3, and
Fig. 5 is a side view showing a part of a carcass ply before a vulcanizing step.

### [Description of the Designations]

- 2: tire
- 4: tread
- 6: sidewall
- 8: belt
- 10: inner liner
- 12: bead
- 14: carcass
- 16: chafer
- 18: inside layer
- 20: outside layer
- 22: inside portion
- 24: outside portion
- 26: core
- 28: apex
- 30: wire
- 32: core
- 34: apex
- 36: wire
- 38: carcass ply
- 40: manufacturing apparatus
- 42: extruder
- 46: first cutting machine
- 48: cord
- 50: topping rubber
- 52: ribbon
- 54: first cutting blade
- 56: reference ply
- 58: manufacturing apparatus
- 60: second cutting machine
- 62: mold
- 66: second cutting blade
- 68: slit
- 70: external surface
- 72: peripheral surface
- 74: side surface
- 76: center portion
- 78: side portion
- 80: small piece
- 84: overlapping portion

### [Best Mode for Carrying Out the Invention]

The present invention will be described below in detail based on a preferred embodiment with reference to the drawings.

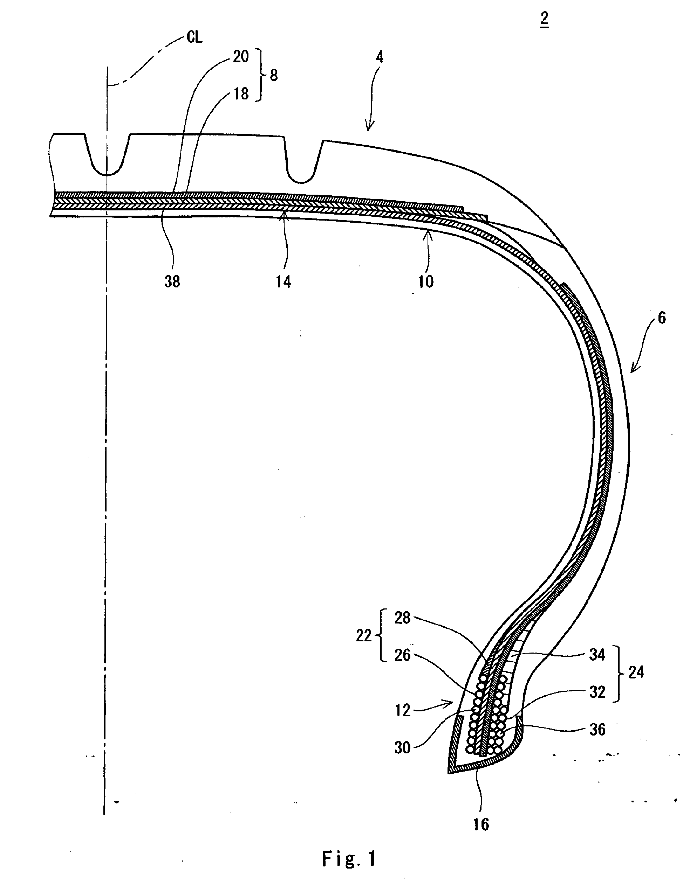

A pneumatic tire 2 shown in Fig. 1 takes an almost symmetrical shape with a one-dotted chain line CL set to be a center line. The tire 2 includes a tread 4, a sidewall 6, a belt 8, an inner liner 10, a bead 12, a carcass 14 and a chafer 16. The tire 2 is of a tubeless type. The tire 2 is attached to a car. In Fig. 1, a vertical direction is set to be a radial direction. A transverse direction is set to be an axial direction. The one-dotted chain line CL represents an equator plane of the tire 2.

The tread 4 is constituted by a crosslinked rubber which is excellent in an abrasion resistance. The tread 4 takes an outward convex shape in the radial direction. The sidewall 6 is extended almost inward in the radial direction from an end of the tread 4. The sidewall 6 is constituted by a crosslinked rubber. The belt 8 is positioned on an outside in the radial direction of the carcass 14. The belt 8 is laminated on the carcass 14. The belt 8 is constituted by an inside layer 18 and an outside layer 20. The inner liner 10 is bonded to an inner peripheral surface of the carcass 14. A rubber having an excellent air shielding property is used for the inner liner 10.

The bead 12 is positioned on an almost inside in the radial direction from the sidewall 6. The bead 12 is constituted by an inside portion 22 and an outside portion 24. The inside portion 22 includes a core 26 and an apex 28 extended outward in the radial direction from the core 26. The core 26 includes a non-extensible wire 30 (typically a wire formed of steel). The core 26 is formed by winding the wire 30 spirally in a circumferential direction. The apex 28 is constituted by a crosslinked rubber having a high hardness. The outside portion 24 includes a core 32 and an apex 34 extended outward in the radial direction from the core 32. The core 32 includes a non-extensible wire 36 (typically a wire formed of steel). The core 32 is formed by winding the wire 36 spirally in the circumferential direction. The apex 34 is constituted by a crosslinked rubber having a high hardness. The tire 2 may have the bead 12 which does not include the apex 28. The tire 2 may have the bead 12 which does not include the apex 34. The tire 2 may have the bead 12 which does not include the apex 28 and the apex 34.

The carcass 14 is formed by a carcass ply 38. The carcass ply 38 is provided between the beads 12 on both sides. As shown in the drawing, in the tire 2, an end of the carcass ply 38 is interposed between the inside portion 22 and the outside portion 24. The carcass 14 may have such a structure that the carcass ply 38 is folded back in the bead 12.

The carcass ply 38 is constituted by a large number of cords arranged in parallel and a topping rubber, which is not shown in the drawing. An absolute value of an angle formed by each of the cords with respect to the equator plane is usually 70° to 90°. In other words, the carcass 14 has a radial structure. The cord is usually constituted by an organic fiber. Examples of a preferred organic fiber include a polyester fiber, a nylon fiber, a rayon fiber, a polyethylene naphthalate fiber and an aramid fiber.

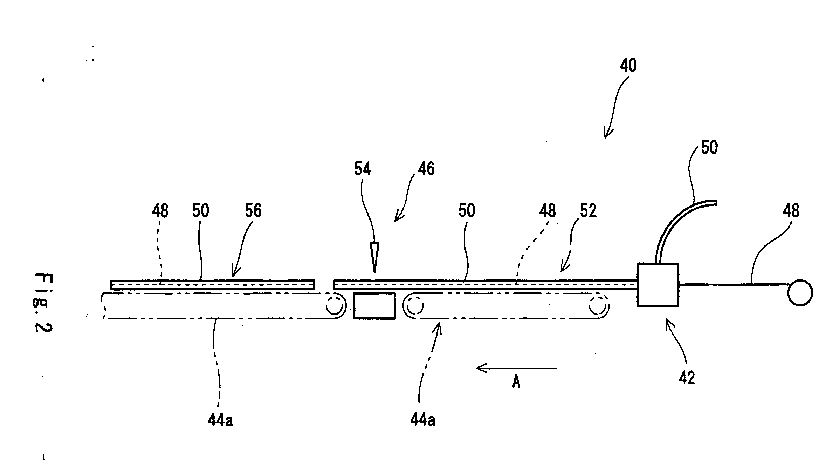

A manufacturing apparatus 40 shown in Fig. 2 includes an extruder 42, delivering means 44a and a first cutting machine 46. The extruder 42 extrudes a plurality of cords 48 and a topping rubber 50 to form a ribbon 52. The delivering means 44a delivers, to the first cutting machine 46, the ribbon 52 formed by the extruder 42. The first cutting machine 46 includes a first cutting blade 54. The first cutting blade 54 can cut the ribbon 52. By the cutting operation, a reference ply 56 is formed. In the manufacturing method, a large number of reference plies 56 are prepared by the manufacturing apparatus 40. The reference ply 56 is an element of the carcass ply 38. In Fig. 2, an arrow line A indicates a delivering direction of the ribbon 52 and the reference ply 56.

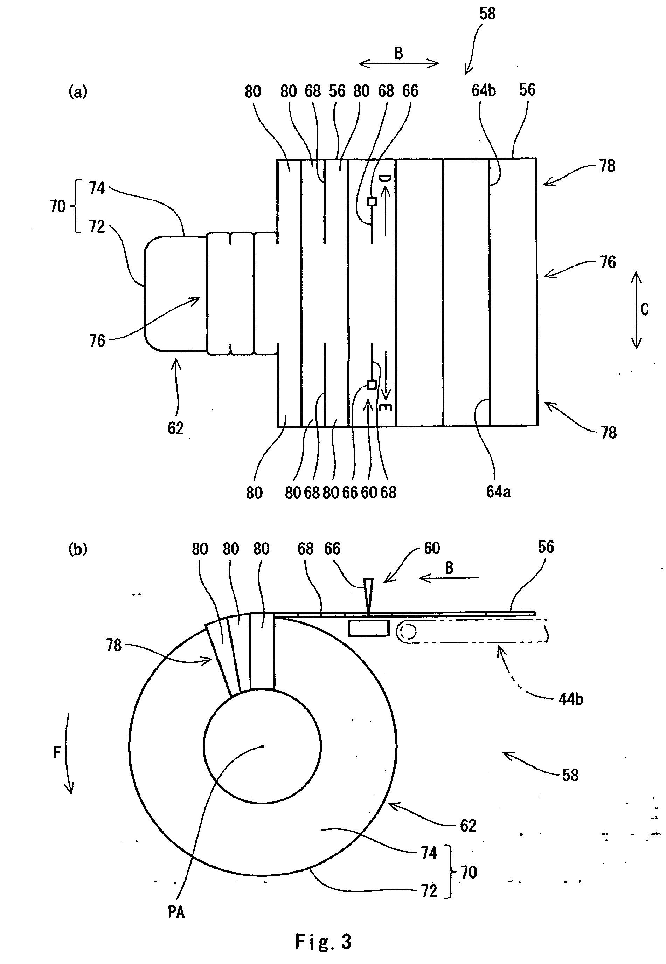

A manufacturing apparatus 58 shown in Figs. 3 (a) and 3 (b) can form the carcass ply 38 from the large number of reference plies 56 prepared by the apparatus 40. In Fig. 3, a double arrow line B indicates a longitudinal direction of the carcass ply 38 formed by the manufacturing apparatus 58. A double arrow line C indicates a transverse direction of the carcass ply 38.

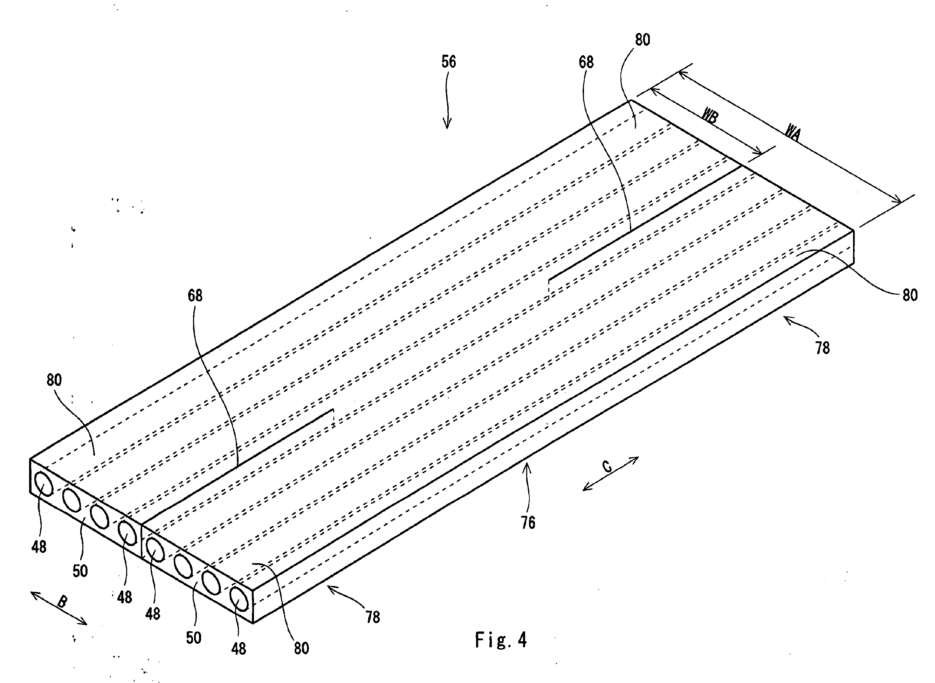

The manufacturing apparatus 58 includes delivering means 44b, a second cutting machine 60 and a mold 62. As shown in the drawing, the reference ply 56 delivered to the manufacturing apparatus 58 is arranged in the longitudinal direction. An edge 64a extended in the transverse direction of the reference ply 56 is bonded to an edge 64b extended in the transverse direction of the other reference ply 56 delivered last. The delivering means 44b can deliver the bonded reference ply 56 to the second cutting machine 60. In Fig. 4, the reference ply 56 is delivered to a left side of the paper.

The second cutting machine 60 includes two second cutting blades 66. As shown in the drawing, the second cutting blade 66 is positioned in an outside portion in the transverse direction of the reference ply 56. The second cutting machine 60 has such a structure that a slit 68 can be formed on the reference ply 56 while the second cutting blade 66 is slid outward in the transverse direction. In Fig. 3(a), an arrow line D indicates a sliding direction of one of the second cutting blades 66 and an arrow line E indicates a sliding direction of the other second cutting blade 66.

The mold 62 can be rotated. The mold 62 includes a toroidal external surface 70. The external surface 70 is approximated to an internal shape of the tire 2 which is filled with air and has an internal pressure held to be 5% of a normal internal pressure. In the manufacturing method, the reference ply 56 is disposed on the external surface 70 with the mold 62 rotated. The external surface 70 is constituted by a peripheral surface 72 to be a corresponding portion to the tread 4 side of the tire 2 and a pair of side surfaces 74 to be corresponding portions to the sidewall 6 side of the tire 2. In Fig. 3(b), an arrow line F indicates a rotating direction of the mold 62. The rotating direction corresponds to a circumferential direction of the tire 2. A point PA indicates a rotation center of the mold 62.

As shown in Fig. 4, the reference ply 56 is constituted by the cords 48 and the topping rubber 50. The cords 48 are covered with the topping rubber 50. The cords 48 are arranged at a predetermined interval in the longitudinal direction. The cords 48 are extended in the transverse direction. As shown in the drawing, the reference ply 56 includes eight cords 48. A length and a width of the reference ply 56 and the number and an interval of the cords 48 included in the reference ply 56 are properly determined in consideration of a specification of the tire 2. In Fig. 4, a double arrow line B indicates the longitudinal direction of the reference ply 56 and a double arrow line C indicates the transverse direction of the reference ply 56.

The reference ply 56 is constituted by a center portion 76 positioned in the vicinity of a center in the transverse direction and a pair of side portions 78 positioned on both sides in the transverse direction of the center portion 76. In the manufacturing method, the slit 68 is formed on the side portion 78. As shown in the drawing, the slit 68 is formed on the topping rubber 50 interposed between the two cords 48. The slit 68 is extended in the transverse direction on a center in the longitudinal direction of the side portion 78. By the formation of the slit 68, the side portion 78 is divided into a plurality of small pieces 80. The small pieces 80 are extended outward in the transverse direction from the center portion 76. In the manufacturing method, the reference ply 56 in which the slit 68 is formed in the side portion 78 and the side portion 78 is divided into the small pieces 80 is delivered to the mold 62. As described above, the external surface 70 of the mold 62 is constituted by the peripheral surface 72 and the pair of side surfaces 74. As shown in Fig. 3, in the manufacturing method, the center portion 76 is provided along the peripheral surface 72. The side portion 78 is provided along the side surface 74.

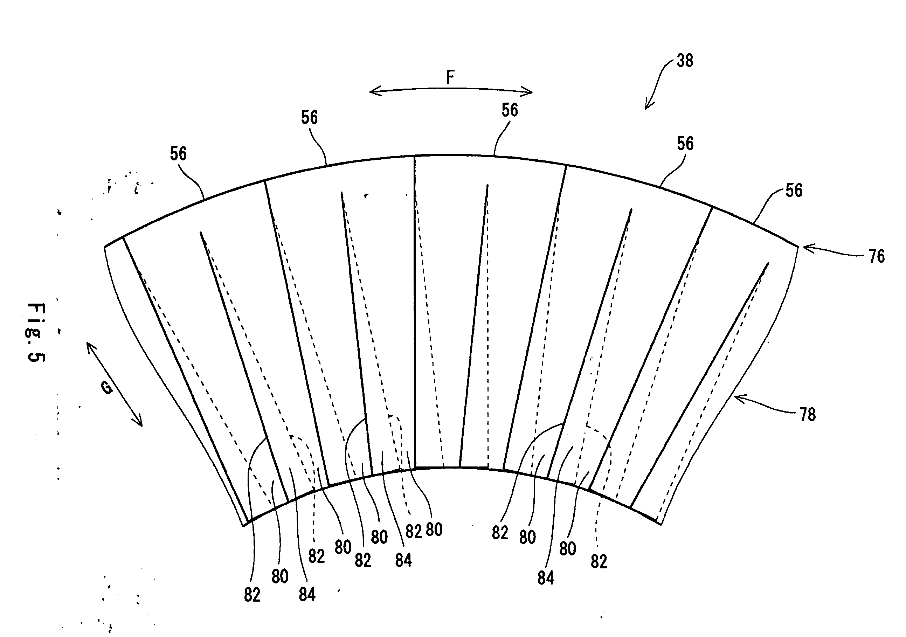

Fig. 5 shows the carcass ply 38 wound around the mold 62. In Fig. 5, a double arrow line F indicates a circumferential direction. A double arrow line G indicates a radial direction. A perpendicular direction to the paper is an axial direction. As shown in the drawing, the carcass ply 38 is constituted by the large number of reference plies 56. The reference plies 56 are arranged in the circumferential direction.

As described above, in the manufacturing method, the center portion 76 of the reference ply 56 is provided along the peripheral surface 72 of the mold 62. The center portion 76 constitutes the carcass ply 38 positioned on an inside in the radial direction of the tread 4 in Fig. 1. The side portion 78 of the reference ply 56 is provided along the side surface 74 of the mold 62. The side portion 78 constitutes the carcass ply 38 positioned on an inside in the axial direction of the sidewall 6 in Fig. 1. The small pieces 80 constituting the side portion 78 are extended almost inward in the radial direction from an end of the center portion 76 and are arranged in the circumferential direction. As shown in Fig. 5, one of side edges 82 of one of the small pieces 80 is put on the other side edge 82 of the other small piece 80. In other words, in the tire 2, the small piece 80 and the other small piece 80 are partially overlapped. An area of an overlapping portion 84 of one of the side edges 82 and the other side edge 82 is gradually increased inward in the radial direction from the end on the center portion 76 side of the small piece 80. The area of the overlapping portion 84 is equal to that of the other overlapping portion 84. In the manufacturing method, the overlapping portion 84 is formed at a certain interval in the circumferential direction.

The tire 2 is manufactured in the following manner. The inner liner 10 is wound around the external surface 70 of the mold 62. The inside portion 22 constituting the bead 12 is disposed on the end of the inner liner 10. The cords 48 and the topping rubber 50 are extruded by the extruder 42 so that the ribbon 52 having the cords 48 arranged is formed. The ribbon 52 is delivered to the first cutting machine 46 through the delivering means 44. In the first cutting machine 46, the ribbon 52 is cut so that a large number of reference plies 56 are prepared. The reference ply 56 and the other reference ply 56 are bonded to each other, and at the same time, are delivered to the second cutting machine 60. In the second cutting machine 60, the slit 68 extended in the transverse direction is formed in the side portion 78 of the reference ply 56 and the side portion 78 is divided into the small pieces 80. The reference ply 56 having the slit 68 formed thereon is delivered to the mold 62 and the center portion 76 of the reference ply 56 is provided along the peripheral surface 72 of the mold 62. The side portion 78 of the reference ply 56 is provided along the side surface 74 of the mold 62, and at the same time, the small piece 80 and the other small piece 80 are partially overlapped. The arrangement of the reference ply 56 on the mold 62 is continuously carried out until the whole external surface 70 of the mold 62 is covered with the reference ply 56. In the manufacturing method, the carcass ply 38 constituted by the large number of reference plies 56 is thus formed. In the manufacturing method, it is also possible to form the carcass ply 38 by forming the slit 68 extended in the transverse direction in the side portion 78 of the reference ply 56, and dividing the side portion 78 into the small pieces 80 and then bonding the reference ply 56 to the other reference ply 56.

In the manufacturing method, members such as the outside portion 24 constituting the bead 12, the inside layer 18 and the outside layer 20 which constitute the belt 8, the sidewall 6 and the tread 4 are assembled into the carcass ply 38 formed as described above so that a raw cover is obtained. The step of thus obtaining the raw cover is referred to as a building step. The raw cover is removed from the mold 62 and is subjected to a vulcanizing step. The raw cover may be subjected to the vulcanizing step in an attaching state to the mold 62 to be an core cylimder.

At the vulcanizing step, the raw cover is put in an opened mold. In the put-in, a bladder contracts. By the put-in, the bladder is positioned on an inside of the raw cover. By filling a gas, the bladder expands. By the expansion, the raw cover is deformed. The deformation is referred to as shaping. A mold is fastened so that an internal pressure of the bladder is raised. The raw cover is interposed between a cavity surface of the mold and an external surface of the bladder and is thus pressurized. The raw cover is heated by a heat conduction from the bladder and the mold. By the pressurization and the heating, a rubber composition of the raw cover flows. The rubber composition causes a crosslinking reaction by the heating so that the tire 2 shown in Fig. 1 is obtained. In the case in which the raw cover is subjected to the vulcanizing step in an attaching state to the mold 62 to be the core cylinder, the bladder is not used.

In the manufacturing method, the reference ply 56 and the other reference ply 56 are bonded to each other so that the carcass ply 38 is formed. By regulating the length of the reference ply 56 and the number of the reference plies 56, it is possible to control a size of the carcass ply 38. The manufacturing method is excellent in an adaptability to a change in a size of the tire 2 which is manufactured. In the manufacturing method, it is not necessary to previously prepare the carcass ply 38 every tire 2 which is manufactured. Therefore, it is possible to suppress a generation of an intermediate stock. The manufacturing method is excellent in a productivity of the tire 2.

In the manufacturing method, the slit 68 extended in the transverse direction is formed in the side portion 78 of the reference ply 56, and the side portion 78 is divided into the small pieces 80. Furthermore, the side portion 78 is provided along the side surface 74 of the toroidal mold 62, and at the same time, the small piece 80 of the side portion 78 and the other small piece 80 are partially overlapped so that the carcass ply 38 is formed. In the manufacturing method, it is possible to properly suppress a disorder of a cord array when changing a shape from the reference ply 56 on the plane to the carcass ply 38 taking a three-dimensional shape. The tire 2 manufactured by the manufacturing method is excellent in a uniformity.

In the manufacturing method, the disorder of the cord array of the carcass ply 38 constituted by the reference ply 56 can be suppressed effectively. From this viewpoint, it is preferable that widths of the small pieces 80 provided on the reference ply 56 should be equal to each other (corresponding to a length WB in the circumferential direction of the tire which will be described below). In respect of the productivity of the tire 2, the number of the small pieces 80 provided on either side of the center portion 76 is preferably equal to or smaller than four and is more preferably equal to or smaller than three. In respect of a compatibility of the uniformity and the productivity in the tire 2, it is particularly preferable that two small pieces 80 having an equal width should be provided on both sides of the center portion 76, respectively.

In Fig. 4, a double arrow line WA indicates a length of the reference ply 56 in the circumferential direction of the tire 2. A double arrow line WB indicates a length of the small piece 80 in the circumferential direction of the tire 2.

In the manufacturing method, it is preferable that the length WA should be equal to or greater than 20 mm and be equal to or smaller than 100 mm. By setting the length WA to be equal to or greater than 20 mm, it is possible to properly maintain the number of the reference plies 56 forming the carcass ply 38. Since the reference ply 56 has a proper width, the carcass ply 38 can be effectively inhibited from meandering. In the manufacturing method, a great deal of time and labor and expensive facility are not required. The manufacturing method is excellent in the productivity of the tire 2. The inhibition of the meander can further enhance the uniformity of the tire 2. From this viewpoint, it is more preferable that the length WA should be equal to or greater than 35 mm. By setting the length WA to be equal to or smaller than 100 mm, it is possible to properly maintain the number of the reference plies 56 constituting the carcass ply 38. In the manufacturing method, the uniformity and productivity of the tire 2 can be maintained. From this viewpoint, the length WA is more preferably equal to or smaller than 70 mm and is particularly preferably equal to or smaller than 50 mm.

In the manufacturing method, it is preferable that the length WB should be equal to or greater than 15 mm and be equal to or smaller than 30 mm. By setting the length WB to be equal to or greater than 15 mm, it is possible to properly maintain the overlap of the small piece 80 and the other small piece 80, and furthermore, to suppress the inhibition of the uniformity of the tire 2 through the overlapping portion 84 formed by the overlap. From this viewpoint, it is more preferable that the length WB should be equal to or greater than 20 mm. By setting the length WB to be equal to or smaller than 30 mm, it is possible to suppress an excessive overlap. Since an excess of a rigidity of the tire 2 can be suppressed, it is possible to properly maintain a ride comfort of the tire 2. From this viewpoint, it is more preferable that the width WB should be equal to or smaller than 25 mm.

### [Example]

While the advantage of the present invention will be apparent from an example, the present invention should not be construed to be restrictive based on the description of the example.

### [Example]

A ribbon was formed by an extruder, and at the same time, was cut so that a large number of reference plies were prepared. A length of the reference ply was set to be 40 mm and a width thereof was set to be 340 mm. The reference ply was bonded to the other reference ply, and at the same time, a slit was formed in a side portion of the reference ply and the side portion was divided into two small pieces. A length of the small piece was set to be 20 mm. The reference ply was provided along an external surface of a toroidal mold so that a carcass ply was formed. A tire having a size of 215/45R17 was obtained from a raw cover having the carcass ply thus formed.

### [Comparative Example 1]

A standard ply having a width of 340 mm was prepared. A slit was formed at a predetermine interval on both sides in a transverse direction of the standard ply. Consequently , there was formed a carcass ply having a continuous portion extended in a circumferential direction of the tire and a large number of small pieces positioned on both sides of the continuous portion and arranged in the circumferential direction. A width of the small piece was set to be 20 mm. A tire having a size of 215/45R17 was obtained from a raw cover having the carcass ply thus formed.

### [Comparative Example 2]

A ribbon was formed by an extruder, and at the same time, was cut so that a large number of sheets were prepared. A length of the reference ply was set to be 10 mm and a width thereof was set to be 340 mm. The sheet was bonded to the other sheet so that a carcass ply was formed. A tire having a size of 215/45R17 was obtained from a raw cover having the carcass ply thus formed.

### [Evaluation of Uniformity]

A radial force variation (RFV) and a tractive force variation (TFV) of (twenty) tires having the specification described above were measured to obtain a mean value in accordance with a uniformity test condition of JASO C607 : 2000 by using a cornering testing machine. The result is shown in the following Table 1 with an index number obtained with respect to 100 of the comparative example 1 based on an inverse number of the mean value. It is indicated that the result is more excellent when the numeric value is increased.

### [Evaluation of Mass Production Trial]

A size changing time in a tire trial was measured. The result is shown in the following Table 1 with an index number obtained with respect to 100 of the comparative example 1 based on an inverse number of the measured value of the size changing time. It is indicated that the result is more excellent when the numeric value is increased.

**Table 1 Result of Evaluation**

| | Example | Comparative Example 1 | Comparative Example 2 |
|---|---|---|---|
| RFV | 101 | 100 | 95 |
| TFV | 110 | 100 | 97 |
| Size Changing Time | 150 | 100 | 150 |

As shown in the Table 1, the manufacturing method according to the example is excellent in a productivity, and furthermore, a tire manufactured by the manufacturing method is excellent in a uniformity. From the result of the evaluation, the advantages of the present invention are apparent.

### [Industrial Applicability]

A method of manufacturing a tire according to the present invention can be applied to various tire manufacturing methods.

## Claims

1. A method of manufacturing a tire comprising the steps of:
preparing a large number of reference plies, each of which includes a plurality of cords arranged in parallel and a topping rubber, has a center portion and a pair of side portions and can be an element of a carcass ply;
bonding the reference ply to the other reference ply;
forming a slit extended in a transverse direction in the side portion and dividing the side portion into a plurality of small pieces;
providing the side portion along a side surface of a toroidal mold and partially overlapping the small piece and the other small piece;
assembling the other member into the reference ply, thereby obtaining a raw cover; and
pressurizing and heating the raw cover in a mold.

2. The manufacturing method according to claim 1, wherein a length of the reference ply in a circumferential direction is equal to or greater than 20 mm.

3. The manufacturing method according to claim 2, wherein a length of the small piece in a circumferential direction is equal to or greater than 15 mm and is equal to or smaller than 30 mm.

4. A method of manufacturing a tire comprising the steps of:
preparing a large number of reference plies, each of which includes a plurality of cords arranged in parallel and a topping rubber, has a center portion and a pair of side portions and can be an element of a carcass ply;
forming a slit extended in a transverse direction in the side portion and dividing the side portion into a plurality of small pieces;
bonding the reference ply to the other reference ply;
providing the side portion along a side surface of a toroidal mold and partially overlapping the small piece and the other small piece;
assembling the other member into the reference ply, thereby obtaining a raw cover; and
pressurizing and heating the raw cover in a mold.

## Patentansprüche

1. Verfahren zum Herstellen eines Reifens, das die Schritte umfasst:
Vorbereiten einer großen Anzahl von Basislagen, von denen jede eine Mehrzahl von Korden, die parallel angeordnet sind, und einen Gummierungskautschuk umfasst, einen zentralen Abschnitt und ein Paar Seitenabschnitte aufweist und ein Element einer Karkasslage sein kann;
Verbinden der Basislage mit der anderen Basislage;
Bilden eines Schlitzes, der sich in der Querrichtung in den Seitenabschnitt erstreckt und den Seitenabschnitt in eine Mehrzahl von kleinen Stücken unterteilt;
Vorsehen des Seitenabschnitts entlang einer Seitenfläche der torusförmigen Form und teilweises Überlappen des kleinen Stücks und des anderen kleinen Stücks;
Zusammenbauen anderer Bauteile mit den Basislagen, wodurch ein Rohdecke erhalten wird; und
Unterdrucksetzen und Erwärmen der Rohdecke in einer Form.

2. Herstellungsverfahren nach Anspruch 1,
wobei eine Länge der Basislage in einer Umfangsrichtung gleich oder größer als 20 mm ist.

3. Herstellungsverfahren nach Anspruch 2,
wobei eine Länge des kleinen Stücks in einer Umfangsrichtung gleich oder größer als 15 mm und gleich oder kleiner als 30 mm ist.

4. Verfahren zum Herstellen eines Reifens, das die Schritte umfasst:
Vorbereiten einer großen Zahl von Basislagen, von denen jede eine Mehrzahl von Korden, die parallel angeordnet sind, und einen Gummierungskautschuk umfasst, einen zentralen Abschnitt und ein Paar Seitenabschnitte aufweist und ein Element einer Karkasslage sein kann;
Bilden eines Schlitzes, der sich in einer Querrichtung in dem Seitenabschnitt erstreckt und den Seitenabschnitt in eine Mehrzahl von kleinen Stücken unterteilt;
Verbinden der Basislage mit der anderen Basislage;
Vorsehen des Seitenabschnitts entlang einer Seitenfläche einer torusförmigen Form und teilweises Überlappen des kleinen Stücks und des anderen kleinen Stücks;
Zusammenbauen anderer Bauteile mit den Basislagen, wodurch eine Rohdecke erhalten wird; und
Unterdrucksetzen und Erwärmen der Rohdecke in einer Form.

## Revendications

1. Procédé de fabrication d'un pneumatique comprenant les étapes consistant à :
préparer un grand nombre de nappes de référence, chacune d'elles incluant une pluralité de câblés agencés en parallèle et un caoutchouc d'enrobage, avec une portion centrale et une paire de portions latérales, et pouvant être un élément d'une nappe de carcasse ;
coller la nappe de référence à une autre nappe de référence ;
former une fente s'étendant en direction transversale dans la portion latérale et diviser la portion latérale en une pluralité de petits morceaux ;
placer la portion latérale le long d'une surface latérale d'un moule toroïdal et amener un petit morceau et un autre petit morceau à se chevaucher partiellement ;
assembler l'autre élément dans la nappe de référence, en obtenant ainsi une couverture brute ; et
mettre sous pression et chauffer la couverture brute dans un moule.

2. Procédé de fabrication selon la revendication 1, dans lequel une longueur de la nappe de référence dans une direction circonférentielle est égale ou supérieure à 20 mm.

3. Procédé de fabrication selon la revendication 2, dans lequel une longueur d'un petit morceau dans une direction circonférentielle est égale ou supérieure à 15 mm et est égale ou inférieure à 30 mm.

4. Procédé de fabrication d'un pneumatique comprenant les étapes consistant à :
préparer un grand nombre de nappes de référence, chacune d'elles incluant une pluralité de câblés agencés en parallèle et un caoutchouc d'enrobage, avec une portion centrale et une paire de portions latérales, et pouvant être un élément d'une nappe de carcasse ;
former une fente s'étendant dans une direction transversale dans la portion latérale et divisant la portion latérale en une pluralité de petits morceaux ;
coller la nappe de référence et l'autre nappe de référence ;
placer la portion latérale le long d'une surface latérale d'un moule toroïdal et amener un petit morceau et un autre petit morceau à se chevaucher partiellement ;
assembler l'autre élément dans la nappe de référence, en obtenant ainsi une couverture brute ; et
mettre sous pression et chauffer la couverture brute dans un moule.
